# EUROPEAN PATENT SPECIFICATION

(11) **EP 0 590 674 B1**
(45) Date of publication and mention of the grant of the patent: **07.01.1998**
(21) Application number: 93115844.8
(22) Date of filing: 30.09.1993
(51) Int. Cl.: B62M 23/02

(54) **Method for powering a muscle-operated vehicle and vehicle**
Verfahren zum Betrieb eines muskelkraftbetriebenen Fahrzeugs und Fahrzeug
Méthode de propulsion d'un véhicule par la force musculaire et véhicule

(30) Priority: 30.09.1992 JP 285432/92
(43) Date of publication of application: 06.04.1994
(60) Divisional application: 97110154.8
(73) Proprietor: YAMAHA HATSUDOKI KABUSHIKI KAISHA, Iwata-shi Shizuoka-ken, 438 (JP)
(72) Inventor: Takata, Nozomu, Iwata-shi, Shizuoka-ken 438 (JP)
(74) Representative: Grünecker, Kinkeldey, Stockmair & Schwanhäusser Anwaltssozietät

(56) References cited:
- EP-A- 0 222 179
- EP-A- 0 559 231
- EP-A- 0 569 954
- PATENT ABSTRACTS OF JAPAN vol. 14, no. 113 (M-0944)2 March 1990 & JP-A-01 314 685 (JAPAN II M KK) 19 December 1989

## Description

The present invention relates to a method for powering a muscle-operated vehicle, especially bicycle as defined in the first part of claim 1 as well as to such a muscle operated vehicle, specifically bicycle, itself as defined in the first part of claim 6, having a muscle-operated driving system, comprising a pedal drive system, and an auxiliary electrical power driving system, comprising an electric motor drive system in parallel to each other wherein the drive force of the electric motor and, accordingly, the power assistance of the manpower drive system is controlled in response to variations of a pedal depressing force of said muscle-operated driving system.

JP-A-01 314 685 discloses a method and a vehicle with the pre-characterizing features of respectively claims 1 and 6.

A device for detecting pedal forces and controlling the drive forces of an electric motor of the auxiliary electrical power driving system in response to the magnitude of the pedal force is disclosed in a Japanese Unexamined Utility Model Publication No. Sho56-76590 and a Japanese Unexamined Patent Publication No. Hei2-74491. In both cases said device provides for increasing the drive force of the electric motor to alleviate the pedal effort when a larger drive force is needed.

Similar solutions are known from the Applicant's European Patent Applications 93107685.5 and 93103706.3 which are comprised in the art under Article 54(3) EPC.

As is apparent from the prior art, as the pedal force is input from the crank pedal, the pedal force varies with a period of a half turn of the crankshaft, rendering the pedal force to be almost zero when the crank pedal comes to the top or bottom dead centres.

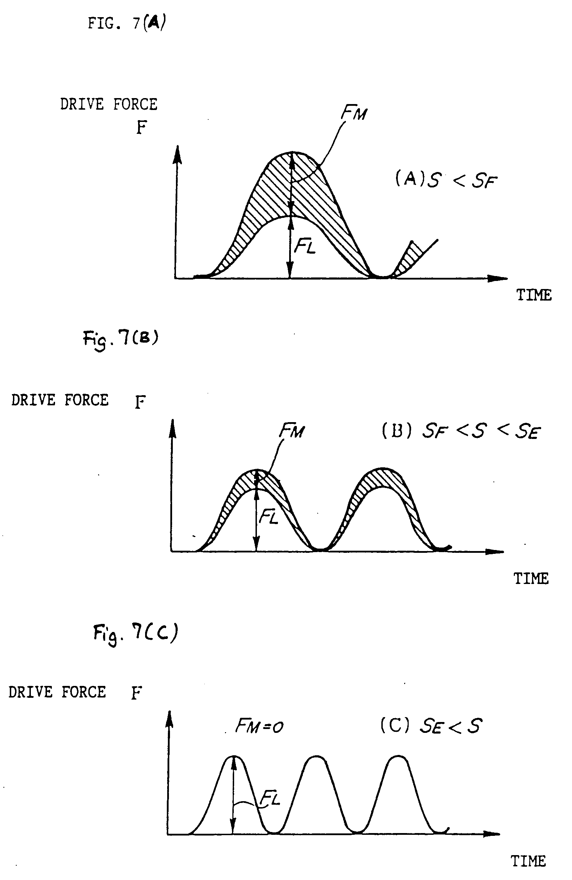

Figure 7 shows the change of the human drive force or pedal force F_{L} against time t. The changing period of the pedal force corresponds to a half turn of the crank pedal. While the devices of the prior art detect the periodically changing pedal force F_{L}, the relationship between the pedal force F_{L} and the electric motor drive force F_{M} of the auxiliary electrical power driving system is defined in a simple manner, namely, the ratio F_{M}/F_{L} which is designated as assist rate η in this application, is determined to be constant.

Thus, as the assist rate η is constant as described above, the motor drive force ${\text{F}}_{\text{M}} {\text{= η x F}}_{\text{L}}$ according to the simple definition is output. Accordingly, in order to produce a larger assisting motor drive force F_{M} with a small pedal effort at a low speed, the assist rate η has to set to a large value. If, on the other hand, the assist rate η is set large, however, the electric motor produces an excessively large drive force also during running of the vehicle, specifically bicycle, at a high speed. This results in an excessively high vehicle speed and unnecessary energy consumption of a battery provided in the auxiliary electrical power driving system.

Accordingly, it is an objective of the present invention to provide a method an a vehicle of the type as indicated above which provides appropriate power assistance suitable for the vehicle, specifically bicycle, under all operating conditions restricting energy consumption from a battery of the auxiliary electrical power driving system to prevent the battery from being wasted.

According to the present invention, the afore-indicated objective is performed in terms of a method for powering a muscle-operated vehicle, especially bicycle, as indicated above in that the ratio (assist rate) between an electric motor drive force and a pedal force is set to be variable in response to vehicle speed, as defined in the second part of claim 1.

Moreover, the afore-indicated objective, in terms of a new muscle-operated vehicle, especially bicycle as set out above, is performed in that the control means comprises a memory wherein the ratio between the drive force F_{M} of the auxiliary electrical power driving system and the pedal force F_{L} detected is stored as an assist rate η which is variable in response to vehicle speed S as defined in the second part of claim 6, preferably, the memory of the control means can store a plurality of assist rate characteristics which are freely selectable through a selecting switch providing an either discontinuous or continuous changeover between different characteristics or selecting the desired one in compliance with the respective driver's actuation.

Prefered embodiments are of the present invention are laid down in the further subclaims.

The present invention is specifically advantageous in that the ratio between the drive force F_{M} of the electric motor and the pedal force F_{L} namely the assist rate ${\text{η (= F}}_{\text{M}} {\text{/F}}_{\text{L}} \text{)}$ is variable to gradually decrease with an increase of the vehicle speed S, at least in the high speed range of vehicle operation, said assist rate η can be preferably made sufficiently small at least in said high speed operating range to restrict the consumption of the battery while rendering it possible to ride at suitable vehicle speeds, specifically bicycle speeds.

In the following the present invention is explained in greater detail by means of several embodiments thereof in conjuncation with the accompanying drawings wherein:
Figure 1 is a side view of a powered bicycle according to an embodiment of the present invention,
Figure 2 is a block diagram of the drive train for powering the bicycle of Figure 1,
Figure 3 is a partial bottom view of the drive system and drive train for powering the bicycle of Figure 1,
Figure 4 is a schematic side view of a pedal depressing force detecting unit of the drive system of Figure 3,
Figure 5 is a cross section along the line V-V in Figure 4,
Figure 6(A) and (B) are diagrams of different characteristics of the assist rate η,
Figure 7(A) - (C) are diagrams showing the periodically changes of the pedal depressing force and the electric motor driving force according to a further embodiment of the present invention.

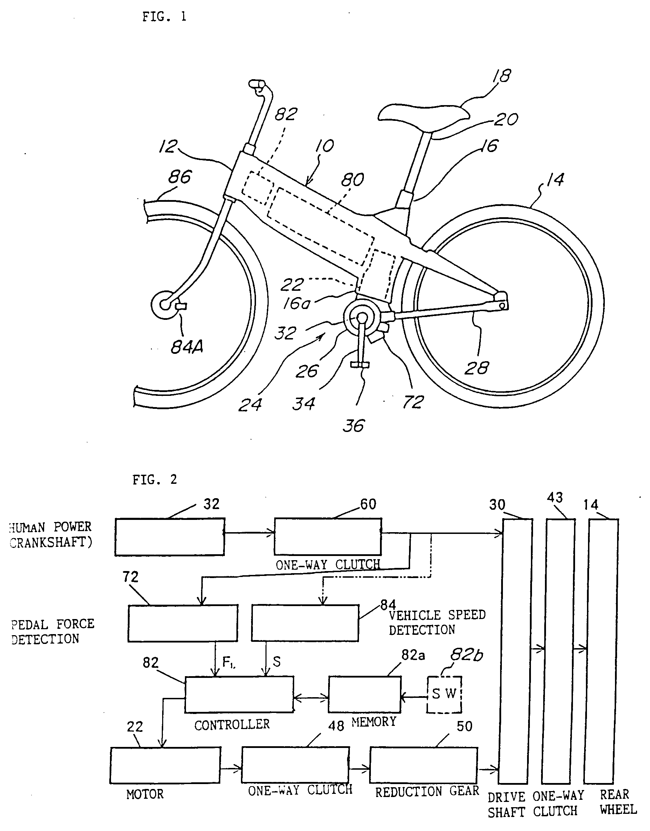

Figure 1 shows a bicycle as one embodiment of the vehicle of the present invention which comprises an auxiliary electrical power driving system. In Figure 1 it is indicated that a main frame 10 of the bicycle extends from a head pipe 12 obliquely back downward to a shaft of a rear wheel 14. A seat tube 16 is secured generally perpendicularly to the main frame 10. A seat post 20 is secured to the top end of the seat tube 16 to support a saddle 18.

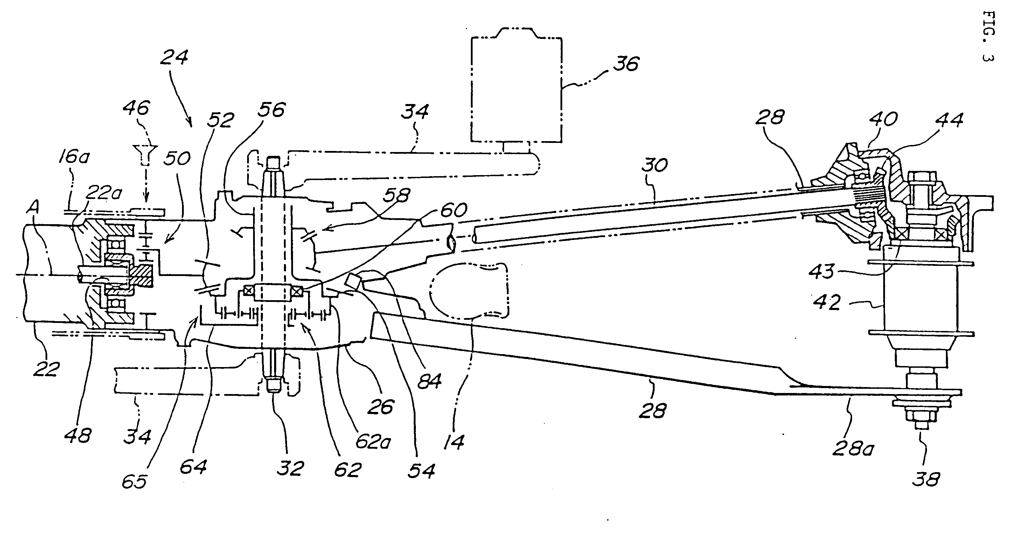

A cylindrical portion 16a which is open downward is formed at the bottom of the seat tube 16 to accommodate a DC electric motor 22. A power unit 24 is secured to the bottom end of the seat tube 16. The power unit 24 is provided with a bottom bracket case 26 and a rear stay 28 extending backward from the bottom bracket case 26. The rear wheel 14 is mounted on the rear end of the rear stay 28. A drive shaft 30 passes through the right hand rear stay 28 (Refer to Fig. 3).

Now the power unit 24 will be explained. Figs. 1 and 3 show a crankshaft 32 passing through the bottom bracket case 26, and a crank 34 secured to both ends of the crankshaft 32. A pedal 36 is attached to the crank 34.

The left end of the wheel shaft 38 for the rear wheel 14 is secured to an end plate 28a secured to the left hand rear stay 28. The right end of the wheel shaft 38 is secured to a bevel gear case 40 secured to the right hand rear stay 28. A hub 42 is rotatably supported with the wheel shaft 38. The rotation of the drive shaft 30 is transmitted through a bevel gear mechanism 44 to the hub 42.

The electric motor 22 is fit from above into and secured to the bottom bracket case 26 as shown in Fig. 3. The motor shaft 22a of the electric motor 22 is perpendicular to the crankshaft 32 and located near the center of the width of the vehicle. The bottom bracket case 26 is fit into and connected to the cylindrical portion 16a of the seat tube 16, while the electric motor 22 is inserted from under into the cylindrical portion 16a.

The rotation of the electric motor 22 is transmitted, as shown in Fig. 3, through a one-way clutch 48, a planetary gear speed reduction mechanism 50, a small bevel gear 52, and a large bevel gear 54 to a cylindrical resultant force shaft 56 supported for free rotation with the crankshaft 32. The rotation of the resultant force shaft 56, in turn, is transmitted through a bevel gear mechanism 58 to the drive shaft 30.

The rotation transmitted from the rear wheel 14 toward the electric motor 22 is shut off with a one-way clutch 43. The planetary gear speed reduction mechanism 50 is of a know type, located between a sun gear driven by the electric motor 22 and a ring gear fixed to the bottom bracket case 26, and transmits the revolution of a planetary gear engaging with those gears to a small bevel gear 52.

The rotation input by human power from the pedal 36 on the other hand is transmitted through the crankshaft 32, a one-way clutch 60, and a planetary gear mechanism 62 to the large bevel gear 54. Thus, the rotation input from the crankshaft 32 is transmitted from the large bevel gear 54 through the resultant force shaft 56, and the bevel gear mechanism 58 to the drive shaft 30. The rotation of the crankshaft 32 is not transmitted while the electric motor 22 is at rest because of the function of the one-way clutch 48. Also, when the crankshaft 32 is at rest or rotating in the reverse direction, the rotation of the electric motor 22 is not transmitted to the crankshaft 32 because of the function of the one-way clutch 60. Here, the drive shaft 30 is located on the right side of the plane A (Refer to Fig. 3) including the motor shaft 22a in the longitudinal direction of the vehicle.

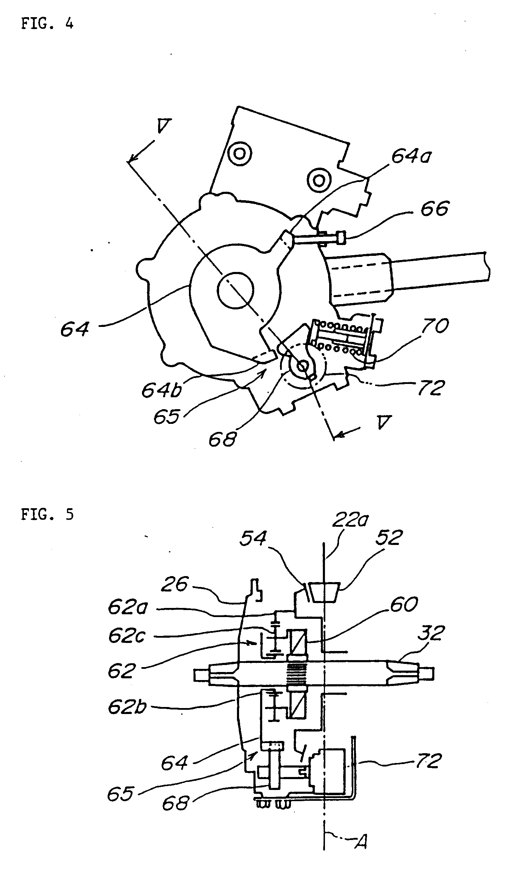

A planetary gear speed increasing mechanism 62 as shown in Figs. 3 and 5 comprises a ring gear 62a secured to the large bevel gear 54, a sun gear 62a secured to a pedal force detecting lever 64, and a planetary gear 62c interposed between those gears. The crankshaft 32 causes the planetary gear 62c to revolve through the one-way clutch 60.

The pedal force detection lever 64 is a component of a pedal force detecting means 65 for detecting the drive force by human power through the pedal 36 by means of reactional forces applied to the sun gear 62b. The pedal force detecting means 65 is located to the left side of the plane A mentioned above.

Namely, the lever 64 of the pedal force detecting means 65, as shown in Figs. 4 and 5, is provided with two projections 64a and 64b. The projection 64a comes into contact with a stopper 66 to check the rotation in the clockwise direction as seen in Fig. 4 or the rotation in the direction opposite that in which the pedal force of the pedal 36 is applied. The projection 64b comes into contact with a second lever 68 so that the second lever 68 is rotated clockwlse by the counterclockwise rotation of the lever 64.

The second lever 68 is urged to return by a return spring 70 so that the lever 64 is urged to return clockwise as seen in Fig. 4. The amount of the rotation of the second lever 68 is transmitted to a potentiometer 72 serving as a pedal force sensor. Thus, the lever 64 rotates clockwise as seen in Fig. 4 in proportion to the pedal force of the pedal 36, the second lever 68 is rotated clockwise, and the pedal force is known from the amount of rotation of the potentiometer 72.

Fig. 1 shows a rechargeable battery 80 such as a lead-acid battery, and a controller 82, both accommodated between the seat tube 16 and the head pipe 12 of the main frame 10. Fig. 1 also shows a vehicle speed detecting means 84 arranged to face the large bevel gear. The vehicle speed detecting means 84 may be of a known type which detects the rotation of the large bevel gear 56 either electromagnetically or optically.

The pedal force F_{L} detected by the potentiometer 72 and the vehicle speed S detected by the vehicle speed detecting means 84 are input to the controller 82 which in turn controls electric motor current based on the pedal force F_{L} and vehicle speed S, to produce an electric motor torque T_{M}.

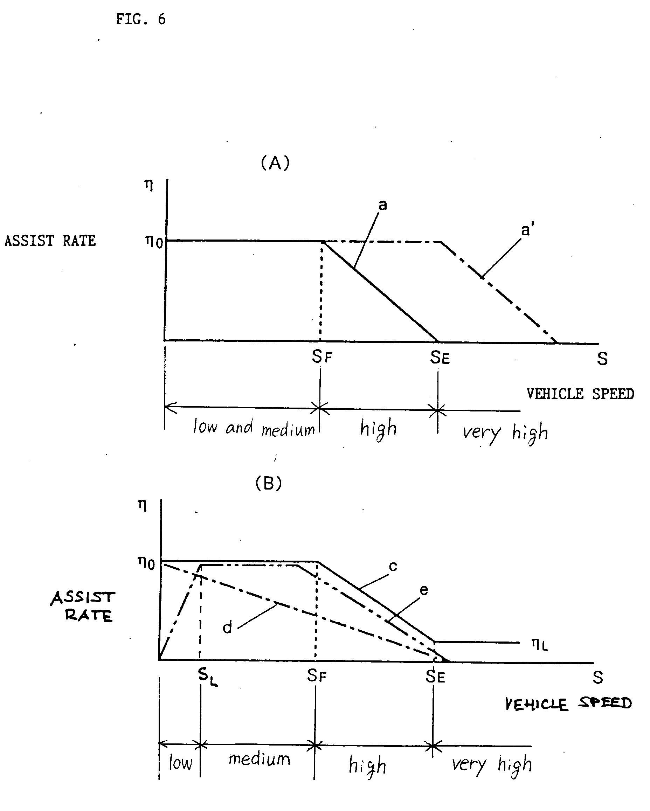

A memory 82 stores the assist rate η which varies with the vehicle speed. The assist rate η is defined as the ratio of the electric motor drive force F_{M} to the pedal force F_{L} (F_{M}/F_{L}) and set for example to the characteristic as shown in Figs. 6(A) and 6(B). According to the characteristic (a) of the solid line in Fig. 6(A), the assist rate η is constant ηₒ when the vehicle speed S is not greater than S_{F}, gradually decreases linearly for the vehicle speed range S_{F}<S<S_{E} as determined by the equation ${\text{η = η}}_{\text{o}} {\text{× (S}}_{\text{E}} {\text{- S)/(S}}_{\text{E}} {\text{- S}}_{\text{F}} \text{) (1)}$, and zero for the vehicle speed range S_{E}<S.

The controller 82 first determines the assist rate η for the vehicle speed S using the characteristics stored in the memory 82a. The drive force F_{M} which the electric motor should produce at this time is determined from the equation [${\text{F}}_{\text{M}} {\text{= ηF}}_{\text{L}}$].

Fig. 7 as a whole shows changes in the resultant drive force ${\text{F = F}}_{\text{L}} {\text{+ F}}_{\text{M}}$ at this time. Fig. 7(A) represents low and medium speeds not higher than S_{F}, Fig. 7(B) the high speed range S_{F}<S<S_{E}, and Fig. 7(C) the very high speed range S_{E}<S. As apparent from those figures, since the assist rate ${\text{η = η}}_{\text{o}}$ (constant) in the low and medium speed range of S<SF, the drive force F_{M} by the electric motor 22 is determined by ${\text{F}}_{\text{M}} {\text{= η}}_{\text{o}} {\text{F}}_{\text{L}}$. The resultant drive force F also changes in response to the periodical changes in the pedal force F_{L}.

In the high (B) speed range of S_{F}<S<S_{E}, η is determined by the equation (1) described above and is smaller than ηₒ. In the very high (C) speed range of S_{E}<S, η is zero so that the resultant drive force is only the pedal force F_{L}.

While the assist rate η of the characteristic (a) of Fig. 6(A) is used in the embodiment described above, the characteristic to be used may be changed in many ways. For example, the characteristic may be (a'), as shown in Fig. 6(A), defined by translating the characteristic (a) to the higher speed side. In this case, the bicycle becomes suitable for running at higher speeds because the vehicle speed range for the assist rate ηₒ is expanded to the high speed side.

In the diagrams of figures 6(A) and (B) the symbols used have the following meaning or indicate the following speed ranges, generally vehicle speed S in the range from zero to S_{F} refers to a low and medium speed range of vehicle operation which, in turn, in figure 6(B) is subdivided in a low speed operating range covering speeds from zero to S_{L}. Moreover, vehicle speeds in the range from S_{F} to S_{E} belong to the high speed range of vehicle operation whereas as vehicle speeds exceeding the speed S_{E} belong to the very high speed operating range.

Accordingly, the further samples of the assist rate η shown in figure 6(B) represent the following conditions: characteristic (c) represents an assist rate η which is not zero in the very high speed operating range of the bicycle but which is kept at a constant value η_{L} for the very high speed range (S_{E}<S). The characteristic (d) represents the assist rate η decreasing gradually in low and medium speed range (S<S_{F}) and in the high speed operating range (S_{F}<S<S_{E}) while in the very high speed operating range (S_{E}<S) η = 0, ie., no power assistance is provided. The characteristic (e) represents the assist rate η which gradually increases in the low speed operating range of vehicle speed (S<S_{L}) while in the medium speed range (S_{L}<S<S_{F}) the assist rate is kept constant at η0. Then in the high speed operating range (S_{F}<S<S_{E}) the assist rate η gradually decreases to practically zero in the very high speed operating range (S_{E}<S).

According to the characteristic (e), a riding impression like that of an ordinary bicycle without an electric motor can be provided by making the assist rate small at the time of starting.

It is also possible that a plural number of characteristics of the assist rate η are stored in the memory 82a so that any one of them can be selected through a selection switch 82b (Fig. 2). The characteristic may also be translated with respect to the vehicle speed S as shown in Fig. 6(A) by means of the switch 82b so that the characteristic may be changed to any required one either continuously or discontinuously.

While the vehicle speed detecting means 84 is arranged to face the large bevel gear 54 in the embodiment described above, the means 84 may also be arranged at the front wheel 86 as shown with the reference number 84A in Fig. 1. However, energy consumption can be further saved when the means 84 is arranged between the crankshaft 32 and the one-way clutch 43 as in the embodiment described above at the time of downhill ride because the speed S is made zero by stopping the crankshaft 32.

While the rear wheel 14 is driven by a transmission arrangement comprising a shaft drive mechanism using the drive shaft 30 in the embodiment described above, this invention may also be embodied so that the rear wheel 14 is driven by a transmission arrangement comprising a chain drive mechanism with a sprocket fixed to the resultant force shaft 56.

Since the drive force (F_{M}) of the electric motor (22) to the pedal force (F_{L}) namely the assist rate ${\text{η (= F}}_{\text{M}} {\text{/F}}_{\text{L}} \text{)}$ is made to gradually decrease with the increase in the vehicle speed S at least in the high speed range, the assist rate η can be made sufficiently small at least in the high speed range to restrict the consumption of the battery while making it possible to ride at speeds suitable for the bicycle.

## Claims

1. Method for powering a muscle-operated vehicle, especially bicycle, having a muscle-operated driving system, an auxiliary electrical power driving system and a control means for controlling the output of said electrical power driving system in response to the variations of a pedal depressing force of the muscle-operated driving system wherein a pedal force of the muscle-operated driving system and a vehicle speed are detected to derive an electric motor drive force of the electrical power driving system, **characterised in that** a ratio (η) between the electric motor drive force (F_{M}) and the pedal force (F_{L}) is variable in response to a detected vehicle speed (S) whereby said ratio (η) is gradually decreased with the increase in the vehicle speed at least in a high speed operating range of the vehicle.

2. Method as claimed in claim 1, **characterised in that** the ratio (η) between the electric motor drive force (F_{M}) and the pedal force (F_{L}) is kept nearly constant in a low and medium speed operating range and that the ratio (η) gradually decreases nearly linearly in a high speed operating range to zero in a very high speed operating range of the vehicle.

3. Method as claimed in claim 1, **characterised in that** the ratio (η) between the electric motor drive force (F_{M}) and the pedal force (F_{L}) is kept nearly constant in the low and medium speed operating ranges while the ratio (η) gradually decreases nearly linearly to a certain positive value (η_{L}) or to zero in the high speed operating range of the vehicle.

4. Method as claimed in claim 1, **characterised in that** the ratio (η) between the electric motor drive force (F_{M}) and the pedal force (F_{L}) decreases gradually over the low and medium and high vehicle speed operating ranges to be generally zero in the very high speed operating range of the vehicle.

5. Method as claimed in claim 1, **characterised in that** the ratio (η) between the electric motor drive force (F_{M}) and the pedal force (F_{L}) gradually increases in a low speed operating range to be kept nearly constant for a certain follow-up period in the medium speed operating range to gradually decrease thereafter in a high to generally zero in a very high speed operating range of the vehicle.

6. A vehicle, especially bicycle, having a muscle operated driving system, an auxiliary electrical power driving system, a pedal depressing force detecting means, a vehicle speed detecting means and a control means for controlling the output of the electrical power driving system in response to variations of the pedal depressing force detected, **characterised in that** the control means (82) comprises a memory (82a) wherein the ratio between the drive force (F_{M}) of the auxiliary electrical power driving system and the pedal force (F_{L}) detected is stored as an assist rate (η) which is variable in response to a detected vehicle speed (S), whereby said assist rate (η) is gradually decreasable with the increase in the vehicle speed at least in a high speed operating range of the vehicle.

7. A vehicle as claimed in claim 6, **characterised in that** said selection switch (82b) enables to change the characteristic of the assist rate (η) either continuously or discontinuously to a desired one as stored in the memory (82a).

8. A vehicle as claimed in claim 6 or 7, **characterised in that** a crankshaft (32) of the manpower drive system, via a one-way clutch (60), is coupled to a drive shaft or chain (30) which, in turn, drives a rear wheel (14) of the bicycle via another one-way clutch (43).

9. A vehicle as claimed in claim 8 **characterised in that** the pedal depressing force detecting means (65) receives a signal through the one-way clutch (60) downstream of the crankshaft (32) and said pedal depressing force detecting means (65) and the bicycle speed detecting means (84) feed the controller (82) which directly controls the electric motor (22), said electric motor (22) driving said drive shaft or chain (30) via another one-way clutch (48) and a speed reduction gear or roller mechanism (50).

10. A vehicle as claimed in claim 9, **characterized in that** said bicycle speed detecting means (84) is arranged between the crankshaft (32) and the one-way clutch (43).

11. A vehicle as claimed in at least one of the preceding claims 6 to 10, **characterised in that** a chargeable battery (80) and the controller (82) are housed in a space formed by a frame member between a head pipe (12) and a seat tube (16) of a main frame (10) of the bicycle whereas the DC electric motor (22) is provided at a bottom end of the seat tube (16).

12. A vehicle as claimed in at least one of the preceding claims 8 to 10, **characterised in that** the rotation of the drive shaft (30) is transmitted via a bevel gear mechanism (44) and the one-way clutch (43) to a hub (42) of the rear wheel (14).

13. A vehicle as claimed in at least one of the preceding claims 9 or 11, **characterised in that** the electric motor (22) is secured to a bottom bracket case (26) at the lower end of the seat tube (16) with its motor shaft (22a) located near the centre in the bicycles width wise direction, said motor shaft (22a) extending perpendicularly to the crankshaft (32).

14. A vehicle as claimed in at least one of the preceding claims 8 to 13, **characterised in that** a torque of the motor shaft (22a) of the electric motor (22) is transmitted via the one-way clutch (48), the planetary reduction gear or roller mechanism (50), a small bevel gear (52) and a large bevel gear (54) to a cylindrical, resultant force shaft (56) supported for free rotation on the crankshaft (32), wherein the rotation of the resultant force shaft (56) is transmitted through a bevel gear mechanism (58) to the drive shaft (30).

15. A vehicle as claimed in at least one of the preceding claims 9 to 14, **characterised in that** the rotation transmitted from the rear wheel (14) toward the electric motor (22) is interrupted by the one-way clutch (43) incorporated in the hub (42) of the rear wheel (14).

16. A vehicle as claimed in at least one of the preceding claims 9 to 15, **characterised in that** the manpower input to the crankshaft (32) is transmitted by the one-way clutch (60) and a planetary speed increasing gear mechanism (62) to the large bevel gear (54).

17. A vehicle as claimed in claim 16, **characterised in that** the planetary speed increasing gear mechanism (62) comprises a ring gear (62a) secured to a large bevel gear (54), a sun gear (62b) secured to a pedal force detection lever (64) and a planetary gear (62c) interposed between those components, said planetary gear (62c) being driven through the crankshaft (32) through the one-way clutch (60).

18. A vehicle as claimed in at least one of the preceding claims 6 to 17, **characterised in that** the pedal depression detection means (65) comprises a first lever (64) having a projection (64b) which engages a second lever (68) when the first lever (64) is rotated counterclockwise causing said second lever (68) to rotate in a clockwise direction against the biasing force of a return spring (70) which applies a return force to the second lever (68).

19. A vehicle as claimed in claim 18, **characterised in that** the rotation of the second lever (68) is transmitted to a potentiometer (72) which indicates the pedal depressing force (F_{L}).

## Patentansprüche

1. Verfahren zum Antreiben eines muskelbetätigten Fahrzeugs, insbesondere eines Fahrrades, das ein muskelbetätigtes Antriebssystem aufweist, ein elektrisches Hilfskraftantriebssystem aufweist und eine Steuereinrichtung zum Steuern der Ausgangsleistung des elektrischen Kraftantriebssystems im Ansprechen auf die Änderungen einer Pedalniederdrückkraft des muskelbetätigten Antriebssystems aufweist, wobei eine Pedalkraft des muskelbetätigten Antriebssystems und eine Fahrzeuggeschwindigkeit nachgewiesen werden, um eine elektrische Motorantriebskraft des elektrischen Kraftantriebssystems abzuleiten, **dadurch gekennzeichnet,** daß ein Verhältnis (η) zwischen der Elektromotor-Antriebskraft (F_{M}) und der Pedalkraft (F_{L}) im Ansprechen auf eine nachgewiesene Fahrzeuggeschwindigkeit (S) variabel ist, wobei das Verhältnis (η) mit dem Anwachsen der Fahrzeuggeschwindigkeit zumindest in dem Betriebsbereich hoher Geschwindigkeiten des Fahrzeuges vermindert wird.

2. Verfahren nach Anspruch 1, **dadurch gekennzeichnet,** daß das Verhältnis (η) zwischen der Elektromotor-Antriebskraft (F_{M}) und der Pedalkraft (F_{L}) in einem Betriebsbereich niedriger und mittlerer Geschwindigkeiten nahezu konstant gehalten wird und daß das Verhältnis (η) sich nahezu linear in einem Betriebsbereich hoher Geschwindigkeiten bis auf Null in einem Betriebsbereich sehr hoher Geschwindigkeiten des Fahrzeuges allmählich vermindert.

3. Verfahren nach Anspruch 1, **dadurch gekennzeichnet,** daß das Verhältnis (η) zwischen der Elektromotor-Antriebskraft (F_{M}) und der Pedalkraft (F_{L}) in den Betriebsbereichen niedriger und mittlerer Geschwindigkeiten nahezu konstant gehalten wird, währenddessen sich das Verhältnis (η) nahezu linear auf einen bestimmten positiven Wert (η_{L}) oder auf Null in dem Betriebsbereich hoher Geschwindigkeit des Fahrzeugs allmählich vermindert.

4. Verfahren nach Anspruch 1, **dadurch gekennzeichnet,** daß das Verhältnis (η) zwischen der Elektromotor-Antriebskraft (F_{M}) und der Pedalkraft (F_{L}) sich allmählich über die Betriebsbereiche niedriger, mittlerer und hoher Fahrzeuggeschwindigkeiten bis auf im allgemeinen Null in dem Betriebsbereich sehr hoher Geschwindigkeiten des Fahrzeugs vermindert.

5. Verfahren nach Anspruch 1, **dadurch gekennzeichnet,** daß daß das Verhältnis (η) zwischen der Elektromotor-Antriebskraft (F_{M}) und der Pedalkraft (F_{L}) in einem Betriebsbereich niedriger Geschwindigkeiten allmählich anwächst, um für eine bestimmte nachfolgende Periode in dem Betriebsbereich mittlerer Geschwindigkeiten nahezu konstant gehalten zu werden, und um danach in einem Betriebsbereich hoher Geschwindigkeiten auf im allgemeinen Null in einem Betriebsbereich sehr hoher Geschwindigkeit des Fahrzeuges allmählich vermindert zu werden.

6. Fahrzeug, insbesondere Fahrrad, das ein muskelbetätigtes Antriebssystem aufweist, ein elektrisches Hilfskraftantriebssystem aufweist, eine Pedalniederdrückkraft-Nachweiseinrichtung aufweist, eine Fahrzeuggeschwindigkeits-Nachweiseinrichtung aufweist und eine Steuereinrichtung aufweist zum Steuern der Ausgangsleistung des elektrischen Kraftantriebssystems im Ansprechen auf Änderungen der nachgewiesenen Pedalniederdrückkraft, **dadurch gekennzeichnet,** daß die Steuereinrichtung (82) einen Speicher (82a) umfaßt, wobei das Verhältnis zwischen der Antriebskraft (F_{M}) des elektrischen Hilfskraftantriebssystems und der nachgewiesenen Pedalkraft (F_{L}) als ein Unterstützungsverhältnis (η) gespeichert wird, das im Ansprechen auf eine nachgewiesene Fahrzeuggeschwindigkeit (S) variabel ist, wobei das Unterstützungsverhältnis (η) mit Anwachsen der Fahrzeuggeschwindigkeit zumindest in einem Betriebsbereich hoher Geschwindigkeiten des Fahrzeuges allmählich verminderbar ist.

7. Fahrzeug nach Anspruch 6, **dadurch gekennzeichnet,** daß derAuswählschalter (82b) es ermöglicht, die Kennlinie das Unterstützungsverhältnis (η) entweder kontinuierlich oder diskontinuierlich auf eine gewünschte Kennlinie, wie sie in dem Speicher (82a) gespeichert ist, zu verändern.

8. Fahrzeug nach Anspruch 6 oder 7, **dadurch gekennzeichnet,** daß eine Kurbelwelle (82) eines Antriebssystems menschlicher Arbeitsleistung über eine Freilaufkupplung (60) mit einer Antriebswelle oder einer Kette (30) gekoppelt ist, die wiederum ein Hinterrad (14) des Fahrzeugs über eine andere Freilaufkupplung (43) antreibt.

9. Fahrzeug nach Anspruch 8, **dadurch gekennzeichnet,** daß die Pedalniederdrückkraft-Nachweiseinrichtung (65) ein Signal durch die Freilaufkupplung (60) stromabwärts der Kurbelwelle (32) und der Pedalniederdrückkraft-Nachweiseinrichtung (65) und der Fahrradgeschwindigkeits-Nachweiseinrichtung (84) empfängt, das dem Steuergerät (82) zugeführt wird, welches direkt den Elektromotor (22) steuert, wobei der Elektromotor (22) die Antriebswelle oder die Kette (30) über eine andere Freilaufkupplung (48) und ein Übersetzungsgetriebe ins Langsame oder einen Rollenmechanismus (50) antreibt.

10. Fahrzeug nach Anspruch 9, **dadurch gekennzeichnet,** daß die Fahrradgeschwindigkeits-Nachweiseinrichtung (84) zwischen der Kurbelwelle (32) und der Freilaufkupplung (43) angeordnet ist.

11. Fahrzeug nach zumindest einem der vorhergehenden Ansprüche 6 bis 10, **dadurch gekennzeichnet,** daß ein Sammler (80) und das Steuergerät (82) in einem Raum aufgenommen werden, der durch ein Rahmenelement zwischen einem Kopfrohr (12) und einem Sattelrohr (16) eines Hauptrahmens (10) des Fahrrades ausgebildet ist, wobei der Gleichstromelektromotor (22) an einem unteren Ende des Sattelrohres (16) vorgesehen ist.

12. Fahrzeug nach zumindest einem der vorhergehenden Ansprüche 8 bis 10, **dadurch gekennzeichnet,** daß die Drehung der Antriebswelle (30) über einen Kegelradmechanismus (44) und die Freilaufkupplung (43) auf eine Radnabe (42) des Hinterrades (14) übertragen wird.

13. Fahrzeug nach zumindest einem der vorhergehenden Ansprüche 9 oder 11, **dadurch gekennzeichnet,** daß der Elektromotor (22) miteinem unteren Trägergehäuse (26) an dem unteren Ende des Sattelrohres (16) befestigt ist, wobei die Motorwelle (22a) nahe der Mitte des Fahrrades in Breitenrichtung angeordnet ist, und wobei die Motorwelle (22a) sich senkrecht zu der Kurbelwelle (32) erstreckt.

14. Fahrzeug nach zumindest einem der vorhergehenden Ansprüche 8 bis 13, **dadurch gekennzeichnet,** daß ein Drehmoment der Motorwelle (22a) des Elektromotors (22) über eine Freilaufkupplung (48), das Planetengetriebe ins Langsame oder der Rollenmechanismus (50), ein kleines Kegelrad (52) und eines großes Kegelrad (54) auf eine zylindrische Welle (56) der Kraftresultierenden übertragen wird, die für eine freie Drehung auf der Kurbelwelle (32) gestützt wird, wobei die Drehung der Welle (56) der Kraftresultierenden durch einen Kegelradmechanismus (58) auf die Antriebswelle (30) übertragen wird.

15. Fahrzeug nach zumindest einem der vorhergehenden Ansprüche 9 bis 14, **dadurch gekennzeichnet,** daß die Drehung, die von dem Hinterrad (14) zu dem Elektromotor (22) übertragen wird, durch die Freilaufkupplung (43) unterbrochen wird, die in der Radnabe (42) des Hinterrades (14) eingebaut ist.

16. Fahrzeug nach zumindest einem der vorhergehenden Ansprüche 9 bis 15, **dadurch gekennzeichnet,** daß die menschliche Eingangsleistung zur Kurbelwelle (32) durch eine Freilaufkupplung (60) und einen Planetenrad-Übersetzungsmechanismus ins Schnelle (62) zu dem großen Kegelrad (54) übertragen wird.

17. Fahrzeug nach Anspruch 16, **dadurch gekennzeichnet,** daß der Planetenrad-Übersetzungsmechanismus (62) ein Hohlrad (62a) umfaßt, das mit einem großen Kegelrad (54) befestigt ist, ein Sonnenrad (62b) umfaßt, das mit dem Pedalkraft-Nachweishebel (64) befestigt ist und ein Planetenrad (62c) umfaßt, das zwischen jenen Komponenten angeordnet ist, wobei das Planetenrad (62c) durch die Kurbelwelle (32) über die Freilaufkupplung (60) angetrieben wird.

18. Fahrzeug nach zumindest einem der vorhergehenden Ansprüche 6 bis 17, **dadurch gekennzeichnet,** daß die Pedalniederdrückkraft-Nachweiseinrichtung (65) einen ersten Hebel (64) umfaßt, der einen Vorsprung (64b) aufweist, der in einen zweiten Hebel (68) eingreift, wenn der erste Hebel (64) im Gegenuhrzeigersinn gedreht wird, was bewirkt, daß der zweite Hebel (68) in Uhrzeigerrichtung entgegen der Vorspannungskraft einer Rückstellfeder (70) gedrückt wird, welche eine Rückstellkraft auf den zweiten Hebel (68) aufbringt.

19. Fahrzeug nach Anspruch 18, **dadurch gekennzeichnet,** daß die Drehung des zweiten Hebels (68) auf ein Potentiometer (72) übertragen wird, das die Pedalniederdrückkraft (F_{L}) angibt.

## Revendications

1. Procédé de propulsion d'un véhicule par la force musculaire, spécialement une bicyclette ayant un système d'entraînement actionné par la force musculaire, un système d'entraînement auxiliaire à puissance électrique, et un moyen de commande servant à commander la sortie dudit système d'entraînement à puissance électrique en réponse aux variations d'une force d'abaissement de pédale du système d'entraînement actionné par la force musculaire, dans lequel la force de pédalage du système d'entraînement actionné par la force musculaire et la vitesse du véhicule sont mesurées afin d'obtenir une force d'entraînement de moteur électrique du système d'entraînement à puissance électrique, caractérisé en ce que le rapport (η) entre la force d'entraînement de moteur électrique (F_{M}) et la force de pédalage (F_{L}) est variable en réponse à une vitesse de véhicule (s) mesurée, de manière que ledit rapport (η) diminue graduellement au fur et à mesure de l'augmentation de la vitesse du véhicule, au moins dans une plage de fonctionnement à haute vitesse du véhicule.

2. Procédé selon la revendication 1, caractérisé en ce que le rapport (η) entre la force d'entraînement de moteur électrique (F_{M}) et la force de pédalage (F_{L}) est maintenue pratiquement constant dans un plage de fonctionnement à basse et moyenne vitesse, et en ce que le rapport (η) diminue graduellement de façon pratiquement linéaire dans une plage de fonctionnement à haute vitesse, vers la valeur zéro, dans une plage de fonctionnement à vitesse très élevée du véhicule.

3. Procédé selon la revendication 1, caractérisé en ce que le rapport (η) entre la force d'entraînement de moteur électrique (F_{M}) et la force de pédalage (F_{L}) est maintenue pratiquement constant dans les plages de fonctionnement à basse et moyenne vitesse, tandis que le rapport (η) diminue graduellement de façon pratiquement linéaire vers une valeur positive (η_{L}) certaine, ou vers la valeur zéro, dans la plage de fonctionnement à haute vitesse du véhicule.

4. Procédé selon la revendication 1, caractérisé en ce que le rapport (η) entre la force d'entraînement de moteur électrique (F_{M}) et la force de pédalage (F_{L}) diminue graduellement dans les plages de fonctionnement de véhicule à basse et moyenne et vitesse et à vitesse élevée afin d'être proche de la valeur zéro, dans la plage de fonctionnement à vitesse très élevée du véhicule.

5. Procédé selon la revendication 1, caractérisé en ce que le rapport (η) entre la force d'entraînement de moteur électrique (F_{M}) et la force de pédalage (F_{L}) augmente graduellement dans une plage de fonctionnement à basse vitesse, afin d'être maintenu pratiquement constant pendant une période de suivi certaine, dans la plage de fonctionnement à moyenne vitesse, afin de diminuer graduellement ensuite vers une valeur élevée jusqu'à pratiquement la valeur zéro dans une plage de fonctionnement à vitesse très élevée du véhicule.

6. Véhicule, spécialement une bicyclette, ayant un système d'entraînement actionné par la force musculaire, un système d'entraînement auxiliaire à puissance électrique, un moyen de mesure de force d'abaissement de pédale, un moyen de mesure de vitesse de véhicule et un moyen de commande servant à commander la sortie du système d'entraînement à puissance électrique, en réponse aux variations de la force d'abaissement de pédale mesurée, caractérisé en ce que le moyen de commande (82) comprend une mémoire (82a), dans laquelle est stockée le rapport entre la force d'entraînement (FM) du système d'entraînement auxiliaire à puissance électrique et la force de pédalage (FL) à titre de taux d'assistance (η) qui est variable en réponse à la vitesse de véhicule (S) mesurée, de manière que ledit taux d'assistance (η) puisse diminuer graduellement au fur et, à mesure de l'augmentation de la vitesse du véhicule au moins dans une plage de fonctionnement à haute vitesse du véhicule.

7. Véhicule selon la revendication 6, caractérisé en ce que ledit commutateur de sélection (82b) permet de modifier la caractéristique du taux d'assistance (η) de façon continue ou bien discontinue, vers une valeur souhaitée stockée dans la mémoire (82a).

8. Véhicule selon la revendication 6 ou 7, caractérisé en ce qu'un pédalier (32) du système d'entraînement par la force musculaire, via un embrayage à roue libre (60), est couplé à un arbre d'entraînement ou une chaîne (30) qui entraîne à son tour une roue arrière (14) de la bicyclette via un autre embrayage à roue libre (43).

9. Véhicule selon la revendication 8, caractérisé en ce que le moyen de mesure de force d'abaissement de pédale (65) reçoit un signal, via l'embrayage à roue libre (60) en aval du pédalier (32) et ledit moyen de mesure de force d'abaissement de pédale (65), et le moyen de mesure de vitesse de bicyclette (84) alimente l'organe de commande (82) qui commande directement le moteur électrique (22), ledit moteur électrique (22) entraînant ledit arbre d'entraînement ou chaîne (30) via un autre embrayage à roue libre (48) et un engrenage de réduction de vitesse ou mécanisme à rouleau (50).

10. Véhicule selon la revendication 9, caractérisé en ce que ledit moyen de mesure de vitesse de bicyclette (84) est disposé entre le pédalier (32) et l'embrayage à roue libre (43).

11. Véhicule selon au moins l'une des revendications 6 à 10 précédentes, caractérisé en ce qu'une batterie rechargeable (80) et l'organe de commande (82) sont logés dans un espace formé par un organe formant cadre entre un tube de tête (12) et un tube de siège (16) d'un cadre principal (10) de la bicyclette, tandis que le moteur électrique à courant continu (22) est prévu à une extrémité inférieure du tube de siège (16).

12. Véhicule selon au moins l'une des revendications 8 à 10 précédentes, caractérisé en ce que la rotation de l'arbre d'entraînement (30) est transmise, via un mécanisme d'engrenage conique (44) et l'embrayage à roue libre (43), à un moyeu (42) de la roue arrière (14).

13. Véhicule selon au moins l'une des revendications 9 ou 11 précédentes, caractérisé en ce que le moteur électrique (22) est fixé à un boîtier de support (26) inférieur, au niveau de l'extrémité inférieure du tube de siège (16), tandis que son arbre de moteur (22a) est disposé à proximité du centre dans le sens de la largeur de la bicyclette, ledit arbre de moteur (22a) s'étendant perpendiculairement au pédalier (32).

14. Véhicule selon au moins l'une des revendications 8 à 13 précédentes, caractérisé en ce qu'un couple de l'arbre de moteur (22a) du moteur électrique (22) est transmis via l'embrayage à roue libre (48), l'engrenage de réduction planétaire ou mécanisme à rouleaux (50), un pignon conique (52) et une grande roue dentée (54), à un arbre de force résultante (56) cylindrique monté à rotation libre sur le pédalier (32), dans lequel la rotation de l'arbre de force résultante (56) est transmise, via un mécanisme d'engrenage conique (58), à l'arbre d'entraînement (30).

15. Véhicule selon au moins l'une des revendications 9 à 14 précédentes, caractérisé en ce que la rotation, transmise depuis la roue arrière (14) vers le moteur électrique (22), est interrompue par l'embrayage à roue libre (43) incorporé dans le moyeu (42) de la roue arrière (14).

16. Véhicule selon au moins l'une des revendications 9 à 15 précédentes, caractérisé en ce que l'entrée de force musculaire sur le pédalier (32) est transmise par l'embrayage à roue libre (60) et un mécanisme d'engrenage planétaire d'augmentation de vitesse (62) à la grande roue dentée (54).

17. Véhicule selon la revendication 16, caractérisé en ce que le mécanisme planétaire d'engrenage d'augmentation de vitesse (62) comprend une couronne dentée (62a) fixée à la grande roue dentée (54), une roue dentée (62b) fixée à un levier de mesure de force de pédalage (64) et une roue dentée planétaire (62c) disposé entre ces composants, ladite roue dentée planétaire (62c) étant entraînée, via le pédalier (32), par l'intermédiaire de l'embrayage à roue libre (60).

18. Véhicule selon au moins l'une des revendications 6 à 17 précédentes, caractérisé en ce que le moyen de mesure d'abaissement de pédale (65) comprend un premier levier (64) ayant une saillie (64b) qui s'engage contre un deuxième levier (68), lorsque le premier levier (64) est tourné dans le sens contraire des aiguilles d'une montre, forçant ledit deuxième levier (68) à tourner dans le sens des aiguilles d'une montre, à l'encontre de la force de déplacement d'un ressort de rappel (70) qui applique une force de rappel au deuxième levier (68).

19. Véhicule selon la revendication 18, caractérisé en ce que la rotation du deuxième levier (68) est transmise à un potentiomètre (72) qui indique la force d'abaissement de pédale (F_{L}).
